(19) Europäisches Patentamt / European Patent Office / Office européen des brevets

(11) **EP 3 673 011 B1**

(12) **EUROPEAN PATENT SPECIFICATION**


(45) Date of publication and mention of the grant of the patent:
**24.08.2022 Bulletin 2022/34**

(21) Application number: **17922663.4**

(22) Date of filing: **24.08.2017**

(51) International Patent Classification (IPC):
***C08L 23/08*** *(2006.01)* ***C09J 123/08*** *(2006.01)*
***C08K 5/101*** *(2006.01)* ***C08L 93/04*** *(2006.01)*
***C08K 5/01*** *(2006.01)*

(52) Cooperative Patent Classification (CPC):
(C-Sets available)
**C09J 123/0815; C08K 5/01; C08K 5/101** (Cont.)

(86) International application number:
**PCT/CN2017/098855**

(87) International publication number:
**WO 2019/037039 (28.02.2019 Gazette 2019/09)**


(54) **ADHESIVE COMPOSITION**

HAFTZUSAMMENSETZUNG

COMPOSITION ADHÉSIVE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.07.2020 Bulletin 2020/27**



(73) Proprietor: **Dow Global Technologies LLC**
**Midland, MI 48674 (US)**

(72) Inventors:
- **MA, Wanfu**
  **Shanghai 201318 (CN)**
- **ZHANG-WATSON, Ling**
  **Lake Jackson, Texas 77566 (US)**

(74) Representative: **Boult Wade Tennant LLP**
**Salisbury Square House**
**8 Salisbury Square**
**London EC4Y 8AP (GB)**



(56) References cited:
**WO-A1-2015/100349**
**CA-A1- 2 260 675**
**CA-A1- 2 925 813**
**CN-A- 102 977 615**
**US-A1- 2004 167 258**
**US-B1- 6 319 979**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/01, C08L 23/08;**
**C08K 5/101, C08L 23/08;**
**C09J 123/0815, C08L 93/04**

## Description

### BACKGROUND

In the hot melt adhesive industry, single site catalyzed polyolefin elastomers have generally been formulated with hydrogenated tackifiers for hot melt adhesives (HMA) to achieve superior adhesive performance. Hydrogenated tackifiers are derived from petroleum feedstock and can therefore be in tight supply as petroleum feedstock supply tightens. Rosin-based tackifiers (tackifiers derived from rosin) are naturally occurring and their supply is not impacted by petroleum feedstock, in contrast to hydrogenated tackifiers. A need exists to expand polyolefin elastomers use with rosin-based tackifiers in HMA formulations offering suitable adhesive performance.

WO-A-2015/100349 relates to a composition comprising the following components: A) an anhydride and/or carboxylic acid functionalized ethylene/alpha-olefin interpolymer having the following properties: i) a melt viscosity (177C) less than, or equal to, 50,000 cP, ii) a density from 0.855 to 0.900 g/cc; B) a tackifier selected from the following: a) a hydrocarbon tackifier that has a cloud point (DACP) temperature greater than, or equal to, 20C, b) a rosin ester tackifier with an acid number of less than 25, c) a terpene tackifier, or d) a combination thereof.

### SUMMARY

The instant disclosure provides a composition suitable for adhesive applications, and further for holt-melt adhesive applications. The present disclosure provides a composition as defined in claim 1

### BRIEF DESCRIPTION OF THE DRAWINGS

Figure 1 is a schematic representation of a heat stress sample holder in accordance with an embodiment of the present disclosure.

### DEFINITIONS

Any reference to the Periodic Table of Elements is that as published by CRC Press, Inc., 1990-1991. Reference to a group of elements in this table is by the new notation for numbering groups. The numerical ranges disclosed herein include all values from, and including, the lower and upper value. For ranges containing explicit values (e.g., 1 or 2; or 3 to 5; or 6; or 7), any subrange between any two explicit values is included (e.g., 1 to 2; 2 to 6; 5 to 7; 3 to 7; 5 to 6; etc.). Unless stated to the contrary, implicit from the context, or customary in the art, all parts and percents are based on weight and all test methods are current as of the filing date of this disclosure.

An "adhesive composition" is a mixture of components that is capable of joining substrates of interest together under an application of heat and/or pressure. A nonlimiting example of a suitable adhesive composition is a hot melt adhesive (HMA) composition. A "hot melt adhesive (HMA) composition" is a mixture of components that is capable of joining substrates of interest together under the application of heat, or more typically, the application of heat and pressure.

The term "alkyl group" refers to an organic radical derived from an aliphatic hydrocarbon by deleting one hydrogen atom therefrom. An alkyl group may be a linear, branched, cyclic or a combination thereof. In an embodiment, the alkyl group is a $C_1$-$C_{20}$ alkyl group.

The term "composition" refers to a mixture of materials which comprise the composition, as well as reaction products and decomposition products formed from the materials of the composition.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of' excludes from the scope of any succeeding recitation any other component, step, or procedure, excepting those that are not essential to operability. The term "consisting of' excludes any component, step, or procedure not specifically delineated or listed.

An "ethylene-based polymer" or "ethylene polymer" is a polymer that contains a majority amount of polymerized ethylene based on the weight of the polymer, and, optionally, may comprise at least one comonomer. An "ethylene-based interpolymer" is an interpolymer that contains, in polymerized form, a majority amount of ethylene, based on the weight of the interpolymer, and at least one comonomer. Preferably, the ethylene-based interpolymer is a random interpolymer (i.e., comprises a random distribution of it monomeric constituents). A nonlimiting example of a suitable ethylene-based interpolymer is an ethylene plastomer/elastomer.

An "ethylene/$\alpha$-olefin interpolymer" is an interpolymer that contains a majority amount of polymerized ethylene, based on the weight of the interpolymer, and at least one $\alpha$-olefin. An "ethylene/$\alpha$-olefin copolymer" is an interpolymer that contains a majority amount of polymerized ethylene, based on the weight of the copolymer, and an $\alpha$-olefin, as the only two monomer types.

"Ethylene plastomers/elastomers" are substantially linear, or linear, ethylene/$\alpha$-olefin copolymers containing homogeneous short-chain branching distribution comprising units derived from ethylene and units derived from at least one $C_3$-$C_{10}$ $\alpha$-olefin comonomer, or at least one $C_4$-$C_8$ $\alpha$-olefin comonomer, or at least one $C_6$-$C_8$ $\alpha$-olefin comonomer. Ethylene plastomers/elastomers have a density from 0.870 g/cc, or 0.880 g/cc, or 0.890 g/cc to 0.900 g/cc, or 0.902 g/cc, or 0.904 g/cc, or 0.909 g/cc, or 0.910 g/cc, or 0.917 g/cc. Nonlimiting examples of ethylene plastomers/ elastomers include AFFINITY™ plastomers and elastomers (available from The Dow Chemical Company), EXACT™ Plastomers (available from ExxonMobil Chemical), Tafrner™ (available from Mitsui), Nexlene™ (available from SK Chemicals Co.), and Lucene™ (available LG Chem Ltd.).

The term "heteroatom" refers to an atom other than carbon or hydrogen. Nonlimiting examples of suitable heteroatoms include: F, Cl, Br, N, O, P, B, S, Si, Sb, Al, Sn, As, Se and Ge.

The terms, "hydrocarbyl" and "hydrocarbon" refer to substituents containing only hydrogen and carbon atoms, including branched or unbranched, saturated or unsaturated, cyclic, polycyclic or noncyclic species. Nonlimiting examples include alkyl-, cycloalkyl-, alkenyl-, alkadienyl-, cycloalkenyl-, cycloalkadienyl-, aryl-, and alkynyl- groups.

An "interpolymer" is a polymer prepared by the polymerization of at least two different types of monomers. The generic term interpolymer thus includes copolymers (employed to refer to polymers prepared from two different types of monomers), and polymers prepared from more than two different types of monomers.

An "olefin-based polymer" or "polyolefin" is a polymer that contains a majority amount of polymerized olefin monomer, for example, ethylene or propylene, (based on the weight of the polymer), and optionally, may contain at least one comonomer. Nonlimiting examples of an olefin-based polymer include an ethylene-based polymer and a propylene-based polymer.

A "polymer" is a polymeric compound prepared by polymerizing monomers, whether of the same or a different type. The generic term polymer thus embraces the term "homopolymer" (employed to refer to polymers prepared from only one type of monomer, with the understanding that trace amounts of impurities can be incorporated into the polymer structure), and the term "interpolymer," as defined hereinafter. Trace amounts of impurities, for example, catalyst residues, may be incorporated into and/or within the polymer.

A "propylene-based polymer" is a polymer that contains a majority amount of polymerized propylene based on the weight of the polymer, and, optionally, may comprise at least one comonomer.

A "propylene/$\alpha$-olefin interpolymer" is an interpolymer that contains, in polymerized form, a majority amount of propylene, based on the weight of the interpolymer, and at least one $\alpha$-olefin. A "propylene/$\alpha$-olefin copolymer" is a copolymer that contains, in polymerized form, a majority amount of propylene, based on the weight of the copolymer, and an $\alpha$-olefin, as the only two monomer types.

DETAILED DESCRIPTION

The instant disclosure provides a composition suitable for holt-melt adhesive applications. The composition includes: (A) an ethylene-based interpolymer having (i) a density from 0.860 g/cc to 0.900 g/cc; and (ii) a melt viscosity, at 177°C, less than, or equal to, 50,000 mPa·s; and (B) a rosin ester containing (i) greater than, or equal to, 75 mol% aliphatic carbon, based on the total moles of carbon in the rosin ester; and (ii) less than, or equal to, 3.0 mol% ester group carbon, based on total moles of carbon in the rosin ester.

A composition may comprise a combination of two or more embodiments as described herein.

In an embodiment, the present composition further includes an ethylene-based polymer wax that has a melt viscosity, at 135°C, from 1 to 2,000 mPa·s, or from 1 to 1,000 mPa·s, or from 1 to 500 mPa·s, or from 1 to 100 mPa·s, or from 1 to 50 mPa·s, or from 1 to 10 mPa·s, and density from 0.880 to 0.970 g/cc, or from 0.900 to 0.960 g/cc, or from 0.920 to 0.950 g/cc, or from 0.940 to 0.950 g/cc. In a further embodiment, the weight ratio of the ethylene-based interpolymer to the ethylene-based polymer wax is from 1.5:1.0, or 1.8:1.0, or 2.0:1.0 to 3.0:1.0, or 4.0:1.0, or 5.0:1.0, or 10:1.0, or 20:1.0, or 30:1.0, or 40:1.0, or 50:1.0, or 60:1.0, or from 1.5:1.0 to 60:1.0, or from 1.8:1.0 to 30:1.0, or from 1.8:1.0 to 10:1.0, or from 1.5:1.0 to 5.0:1.0, or from 2.0:1.0 to 5.0:1.0, or from 1.8:1.0 to 3.0:1.0, or from 2.0:1.0 to 3.0:1.0. In an embodiment, the weight ratio of the rosin ester to the ethylene-based polymer wax is from 1.5:1.0, or 1.8:1.0, or 2.0:1.0 to 3.0:1.0, or 4.0:1.0, or 5.0:1.0, or 10:1.0, or 20:1.0, or 30:1.0, or 40:1.0, or 50:1.0, or 60:1.0, or from 1.5:1.0 to 60:1.0, or from 1.8:1.0 to 30:1.0, or from 1.8:1.0 to 10:1.0, or from 1.5:1.0 to 5.0:1.0, or from 2.0:1.0 to 5.0:1.0, or from 1.8:1.0 to 3.0:1.0, or from 2.0:1.0 to 3.0:1.0.

In an embodiment, the present composition further includes an ethylene-based polymer wax that has a melt viscosity, at 135°C, from 1 to 500 mPa·s, or from 1 to 100 mPa·s, or from 1 to 50 mPa·s, or from 1 to 10 mPa·s, and density from 0.880 to 0.970 g/cc, or from 0.900 to 0.960 g/cc, or from 0.920 to 0.950 g/cc, or from 0.940 to 0.950 g/cc.

In a further embodiment, the an ethylene-based polymer wax is present in an amount from 2.0 to 30.0 wt%, or from 5.0 to 25.0 wt%, or from 10.0 to 25.0 wt%, based on the total weight of the composition. In a further embodiment, the weight ratio of the ethylene-based interpolymer to the ethylene-based polymer wax is from 1.8:1.0 to 30:1.0, or from 1.8:1.0 to 10:1.0, or from 2.0:1.0 to 5.0:1.0, or from 1.8:1.0 to 3.0:1.0, or from 2.0:1.0 to 3.0:1.0. In an embodiment, the weight ratio of the rosin ester to the ethylene-based polymer wax is from 1.8:1.0 to 30:1.0, or from 1.8:1.0 to 10:1.0, or from 2.0:1.0 to 5.0:1.0, or from 1.8:1.0 to 3.0:1.0, or from 2.0:1.0 to 3.0:1.0.

In an embodiment the composition is an adhesive composition, and further a hot melt adhesive (HMA) composition. Although the following disclosure is directed to HMA compositions, it is understood that the following disclosure is applicable to other adhesive compositions, such as pressure sensitive adhesive compositions, for example.

*A. Ethylene-based interpolymer*

The present adhesive composition includes an ethylene-based interpolymer. Preferably, the ethylene-based interpolymer is a random interpolymer.

In an embodiment, the ethylene-based interpolymer is selected from an ethylene/$\alpha$-olefin interpolymer, or an ethylene/$\alpha$-olefin copolymer. Nonlimiting examples of suitable $\alpha$-olefins include, for example, $C_3$-$C_{20}$ $\alpha$-olefins, or $C_4$-$C_{20}$ $\alpha$-olefins, or $C_3$-$C_{10}$ $\alpha$-olefins, or $C_4$-$C_{10}$ $\alpha$-olefins, or $C_4$-$C_8$ $\alpha$-olefins; $C_3$; $C_4$; $C_5$; $C_6$; and $C_8$ $\alpha$-olefins. Representative $\alpha$-olefins include propylene, 1-butene, 1-pentene, 1-hexene, 1-heptene and 1-octene. In an embodiment, the ethylene-based interpolymer does not contain an aromatic comonomer polymerized therein. In an embodiment, the ethylene-based interpolymer is selected from an ethylene/octene interpolymer, or an ethylene/octene copolymer.

In an embodiment, the ethylene-based interpolymer contains greater than 50 wt% units derived from ethylene, or from 51 wt%, or 55 wt%, or 60 wt%, or 65 wt% to 70 wt%, or 75 wt%, or 80 wt%, or 85 wt%, or 90 wt%, or 95 wt%, or 98 wt%, or 99 wt% units derived from ethylene, based on the weight of the ethylene-based interpolymer.

In an embodiment, the ethylene-based interpolymer contains greater than 50 wt% units derived from ethylene, or from 51 wt%, or 55 wt%, or 60 wt%, or 65 wt% to 70 wt%, or 75 wt%, or 80 wt%, or 85 wt%, or 90 wt%, or 95 wt%, or 98 wt%, or 99 wt% units derived from ethylene, and also contains a reciprocal amount of units derived from an $\alpha$-olefin comonomer, or less than 50 wt%, or from 49 wt%, or 45 wt%, or 40 wt%, or 35 wt% to 30 wt%, or 25 wt%, or 20 wt%, or 15 wt%, or 10 wt%, or 5 wt%, or 2 wt%, or 1 wt%, or 0 wt% units derived from an $\alpha$-olefin comonomer, based on the weight of the ethylene-based interpolymer.

In an embodiment, the ethylene-based interpolymer is an ethylene plastomer/elastomer. In an embodiment, the ethylene plastomer/elastomer is an ethylene/$\alpha$-olefin copolymer, and further an ethylene/octene copolymer. Nonlimiting examples of suitable $\alpha$-olefins include, for example, $C_3$, $C_4$, $C_5$, $C_6$ and $C_8$ $\alpha$-olefins.

In an embodiment, the ethylene-based interpolymer has a melt viscosity, at 177°C, from 500 mPa·s, or 750 mPa·s, or 1,000 mPa·s, or 1,500 mPa·s, or 2,000 mPa·s, or 3,000 mPa·s, or 3,500 mPa·s or 4,000 mPa·s, or 5,000 mPa·s, or 6,000 mPa·s, or 7,000 mPa·s, or 8,000 mPa·s, or 9,000 mPa·s, or 10,000 mPa·s, or 11,000 mPa·s, or 12,000 mPa·s, or 13,000 mPa·s, or 14,000 mPa·s, or 15,000 mPa·s, or 16,000 mPa·s to 17,000 mPa·s, or 18,000 mPa·s, or 19,000 mPa·s, or 20,000 mPa·s, or 25,000 mPa·s, or 30,000 mPa·s, or 35,000 mPa·s, or 40,000 mPa·s, or 45,000 mPa·s, or 50,000 mPa·s. In an embodiment, the ethylene-based interpolymer has a melt viscosity, at 177°C, from 500 mPa·s to 50,000 mPa·s; or from 500 mPa·s to 40,000 mPa·s; or from 500 mPa·s to 35,000 mPa·s; or from 500 mPa·s to 30,000 mPa·s, or from 500 mPa·s to 25,500 mPa·s, or from 500 mPa·s to 20,000 mPa·s. In a further embodiment, the ethylene-based interpolymer is an ethylene/$\alpha$-olefin interpolymer, and further an ethylene/octene interpolymer. In another embodiment, the ethylene-based interpolymer is an ethylene/$\alpha$-olefin copolymer, and further an ethylene/octene copolymer. Nonlimiting examples of suitable $\alpha$-olefins include, for example, $C_3$, $C_4$, $C_5$, $C_6$ and $C_8$ $\alpha$-olefins.

In an embodiment, the ethylene-based interpolymer has a density from 0.860 g/cc, or 0.865 g/cc, or 0.870 g/cc to 0.874 g/cc, or 0.875 g/cc, or 0.880 g/cc, or 0.885 g/cc to 0.890 g/cc, or 0.895 g/cc, or 0.900 g/cc. In a further embodiment, the ethylene-based interpolymer is an ethylene/$\alpha$-olefin interpolymer, and further an ethylene/octene interpolymer. In another embodiment, the ethylene-based interpolymer is an ethylene/$\alpha$-olefin copolymer, and further an ethylene/octene copolymer. In an embodiment, the ethylene-based interpolymer is an ethylene plastomer/elastomer. In an embodiment, the ethylene plastomer/elastomer is an ethylene/$\alpha$-olefin copolymer, and further an ethylene/octene copolymer. Nonlimiting examples of suitable $\alpha$-olefins include, for example, $C_3$, $C_4$, $C_5$, $C_6$ and $C_8$ $\alpha$-olefins.

In an embodiment, the ethylene-based interpolymer has a melting temperature, Tm, from 40°C, or 50°C, or 55°C, or 60°C, or 65°C to 70°C, or 75°C, or 80°C, or 85°C, or 90°C, or 100°C, or 110°C, or 120°C. In a further embodiment, the ethylene-based interpolymer is an ethylene/$\alpha$-olefin interpolymer, and further an ethylene/octene interpolymer. In another embodiment, the ethylene-based interpolymer is an ethylene/$\alpha$-olefin copolymer, and further an ethylene/octene copolymer. In an embodiment, the ethylene-based interpolymer is an ethylene plastomer/elastomer. In an embodiment, the ethylene plastomer/elastomer is an ethylene/$\alpha$-olefin copolymer, and further an ethylene/octene copolymer. Nonlimiting examples of suitable $\alpha$-olefins include, for example, $C_3$, $C_4$, $C_5$, $C_6$ and $C_8$ $\alpha$-olefins.

In an embodiment, the ethylene-based interpolymer has a glass transition temperature, Tg, from -70°C, or

-65°C, or -60°C, or -58°C to -55°C, or -50°C, or -45°C, or -40°C, or -35°C, or - 30°C. In a further embodiment, the ethylene-based interpolymer is an ethylene/α-olefin interpolymer, and further an ethylene/octene interpolymer. In another embodiment, the ethylene-based interpolymer is an ethylene/α-olefin copolymer, and further an ethylene/octene copolymer. In an embodiment, the ethylene-based interpolymer is an ethylene plastomer/elastomer. In an embodiment, the ethylene plastomer/elastomer is an ethylene/α-olefin copolymer, and further an ethylene/octene copolymer. Nonlimiting examples of suitable α-olefins include, for example, $C_3$, $C_4$, $C_5$, $C_6$ and $C_8$ α-olefins.

In an embodiment, the ethylene-based interpolymer has one, some, or all of the following properties: (i) from 51 wt%, or 55 wt%, or 60 wt%, or 65 wt% to 70 wt%, or 75 wt%, or 80 wt%, or 85 wt%, or 90 wt%, or 95 wt%, or 98 wt%, or 99 wt% units derived from ethylene, based on the weight of the ethylene-based interpolymer; and/or (ii) a melt viscosity, at 177°C, from 500 mPa·s, or 750 mPa·s, or 1,000 mPa·s, or 1,500 mPa·s, or 2,000 mPa·s, or 3,000 mPa·s, or 3,500 mPa·s or 4,000 mPa·s, or 5,000 mPa·s, or 6,000 mPa·s, or 7,000 mPa·s, or 8,000 mPa·s, or 9,000 mPa·s, or 10,000 mPa·s, or 11,000 mPa·s, or 12,000 mPa·s, or 13,000 mPa·s, or 14,000 mPa·s, or 15,000 mPa·s, or 16,000 mPa·s to 17,000 mPa·s, or 18,000 mPa·s, or 19,000 mPa·s, or 20,000 mPa·s, or 25,000 mPa·s, or 30,000 mPa·s, or 35,000 mPa·s, or 40,000 mPa·s, or 45,000 mPa·s, or 50,000 mPa·s; and/or (iii) a density from 0.860 g/cc, or 0.865 g/cc, or 0.870 g/cc to 0.874 g/cc, or 0.875 g/cc, or 0.880 g/cc, or 0.885 g/cc to 0.890 g/cc, or 0.895 g/cc, or 0.900 g/cc; and/or (iv) a melting temperature, Tm, from 40°C, or 50°C, or 55°C, or 60°C, or 65°C to 70°C, or 75°C, or 80°C, or 85°C, or 90°C, or 100°C, or 110°C, or 120°C; and/or (v) a glass transition temperature, Tg, from -70°C, or -65°C, or -60°C, or -58°C to -55°C, or -50°C, or -45°C, or -40°C, or -35°C, or -30°C. In a further embodiment, the ethylene-based interpolymer, further an ethylene/α-olefin interpolymer, further an ethylene/α-olefin copolymer, has all of the above properties (i)-(v).

In an embodiment, the ethylene-based interpolymer has one, some, or all of the following properties: (i) greater than 50 wt% units derived from ethylene; and/or (ii) a melt viscosity, at 177°C, from 500 mPa·s, or 8,000 mPa·s, or 1,000 mPa•s to 9,000 mPa·s, or 17,000 mPa·s, or 20,000 mPa•s, or 25,000 mPa•s, or 30,000 mPa•s; and/or (iii) a density from 0.865 g/cc, or 0.870 g/cc to 0.874 g/cc, or 0.875 g/cc, or 0.880 g/cc, or 0.850 g/cc; and/or (iv) a melting temperature, Tm, from 50°C, or 55°C, or 60°C, or 65°C to 70°C, or 75°C, or 80°C, or 85°C, or 90°C; and/or (v) a glass transition temperature, Tg, from -65°C, or -60°C, or -58°C to -55°C, or -50°C, or - 45°C. In a further embodiment, the ethylene-based interpolymer, further an ethylene/α-olefin interpolymer, further an ethylene/α-olefin copolymer, has all of the above properties (i)-(v).

In an embodiment, the ethylene-based interpolymer is present in the composition in an amount from 20 wt%, or 25 wt%, or 30 wt%, or 35 wt%, or 40 wt% to 45 wt%, or 50 wt%, or 55 wt%, or 60 wt%, based on total weight of the composition.

An ethylene/octene interpolymer may comprise two or more embodiments disclosed herein. An ethylene/octene copolymer may comprise two or more embodiments disclosed herein.

An ethylene/α-olefin interpolymer may comprise two or more embodiments disclosed herein. An ethylene/α-olefin copolymer may comprise two or more embodiments disclosed herein.

An ethylene-based interpolymer may comprise two or more embodiments disclosed herein. An ethylene-based copolymer may comprise two or more embodiments disclosed herein.

*B. Rosin Ester*

The present composition includes a rosin ester. A "rosin ester" refers to a polymer containing, in polymerized form, rosin and, optionally, one or more dienes, which polymeric structure is then esterified with one or more polyols, and then the esterified polymeric structure is optionally hydrogenated. It is understood that as an ester, the rosin ester contains at least one ester group with oxygen atoms, the rosin ester thereby excluding tackifier composed only of hydrogen and carbon atoms. A "polyol" is an alcohol containing at least two hydroxyl groups (-OH).

A "rosin" is a mixture of resin acids, which are carboxylic acids. Nonlimiting examples of suitable rosins include gum rosin, wood rosin, tall oil rosin, and combinations thereof. Nonlimiting examples of suitable resin acids include abietic acid, neoabietic acid, dehydroabietic acid, palustric acid, levopimaric acid, pimaric acid, isopimaric acids, and combinations thereof. In an embodiment, the rosin contains abietic acid. In an embodiment, the abietic acid is present as one or more of the following isomeric structures (Structure (A); Structure (B); Structure (C)):

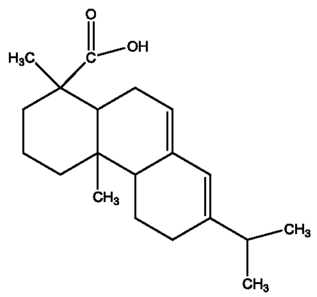 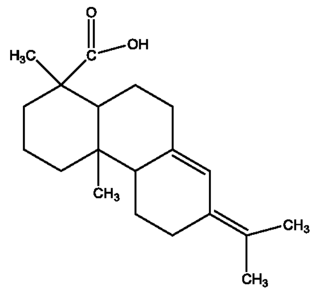 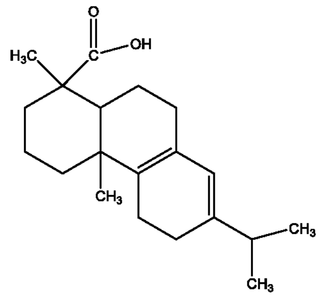

Structure (A) Structure (B) Structure (C).

A "diene" is an unsaturated hydrocarbon containing two double bonds between carbon atoms. The diene can be conjugated-, non-conjugated-, straight chain-, branched chain- or cyclic-hydrocarbon diene having from 6 to 15 carbon atoms. Nonlimiting examples of suitable diene include 1,4-hexadiene; 1,6-octadiene; 1,7-octadiene; 1,9-decadiene; branched chain acyclic diene, such as 5-methyl-1,4-hexadiene, 3,7-dimethyl-1,6-octadiene, 3,7-dimethyl-1,7-octadiene and mixed isomers of dihydromyricene and dihydroocinene; single ring alicyclic dienes, such as 1,3-cyclopentadiene, 1,4-cyclohexadiene, 1,5-cyclooctadiene and 1,5-cyclododecadiene; and multi-ring alicyclic fused and bridged ring dienes, such as tetrahydroindene, methyl tetrahydroindene, dicyclopentadiene, and bicyclo-(2,2,1)-hepta-2,5-diene; alkenyl, alkylidene, cycloalkenyl and cycloalkylidene norbornenes, such as 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, 5-vinyl-2-norbornene, norbornadiene, 5-ethylidene-2-norbornene (ENB), 5-vinylidene-2-norbornene (VNB), 5-methylene-2-norbornene (MNB), dicyclopentadiene (DCPD); and combinations thereof. Further nonlimiting examples of suitable diene include 4-methyl-1,4-hexadiene, 7-methyl-1,6-octadiene, 5,7-dimethyl-1,6-octadiene, 3,7,11-trimethyl-1,6,10-octatriene, 6-methyl-1,5-heptadiene, 1,3-butadiene, 1,6-heptadiene, 1,8-nonadiene, 1,9-decadiene, 1,10-undecadiene, 1,5-cyclododecadiene, bicyclo[2.2.1]hepta-2,5-diene (norbornadiene), tetracyclododecene, butadiene, dicyclopentadiene, vinyl norbornene, mixed isomers of dihydromyricene and dihydroocinene, tetrahydroindene, methyl tetrahydroindene, 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and combinations thereof. In an embodiment, the diene is DCPD.

In an embodiment, the rosin ester is a polymer containing, in polymerized form, a rosin containing abietic acid and DCPD, which polymeric structure is then esterified with one or more polyols, and then the esterified polymeric structure is hydrogenated. In an embodiment, the rosin ester is prepared as described in CN 105585961A and/or CN 102977615A. Nonlimiting examples of suitable rosin esters include KOMOTAC™ KM-100 and KOMOTAC™ KM-100W, each available from Guangdong Komo Co., Ltd.

The rosin ester, suitable for the present compositions, contains greater than, or equal to, 75 mol% aliphatic carbon, based on the total moles of carbon in the rosin ester. An "aliphatic carbon" is a carbon atom covalently bonded to hydrogen or another carbon via a single bond. The aliphatic carbon level pertains to those carbon atoms in the final rosin ester (i.e., the polymerized, esterified, and optionally hydrogenated polymeric structure) that are saturated and bonded to hydrogen or another carbon via a single bond. Aliphatic carbon excludes carbon bonded to a heteroatom, such as oxygen. In an embodiment, the rosin ester contains from 75 mol%, or 76 mol%, or 77 mol%, or 78 mol%, or 79 mol%, or 80 mol%, or 81 mol% to 83 mol%, or 84 mol%, or 85 mol%, or 86 mol%, or 87 mol%, or 88 mol%, or 89 mol%, or 90 mol%, or 91 mol%, or 92 mol%, or 93 mol%, or 94 mol%, or 95 mol% aliphatic carbon, based on the total moles of carbon in the rosin ester.

In an embodiment, the rosin ester contains from 0.5 mol%, or 1.0 mol%, or 1.5 mol%, or 2.0 mol%, or 2.1 mol%, or 2.2 mol% to 2.4 mol%, or 2.5 mol%, or 2.6 mol%, or 2.7 mol%, or 2.8 mol%, or 2.9 mol%, or 3.0 mol% ester group carbon, based on the total moles of carbon in the rosin ester. An "ester group" is a moiety with the following Structure (I):

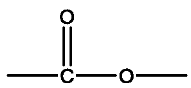

Structure (I). An "ester group carbon" is the carbon of the Structure (I) ester group, the carbon atom bonded to one oxygen atom with a double bond and to a second oxygen atom with a single bond.

In an embodiment, the rosin ester contains less than, or equal to, 3.0 mole percent oxygenates, based on the total moles of carbon in the rosin ester. An "oxygenate" is a carbon atom covalently bonded to only one oxygen atom via a single bond; for example, $-O-CH_{(n)}$ (likely, the "non-carbonyl carbon" connected to the divalent oxygen of an ester group, or the carbon of an ether group). Oxygenates exclude carbon atoms covalently bonded to an oxygen atom via a

double bond (e.g., the carbonyl carbon of an ester, a ketone, or an aldehyde). In an embodiment, the rosin ester contains from 0.05 mol%, or 0.1 mol%, or 0.5 mol%, or 1.0 mol%, or 1.5 mol%, or 1.8 mol%, or 2.0 mol%, or 2.2 mol%, or 2.4 mol% to 2.5 mol%, or 2.6 mol%, or 2.7 mol%, or 2.8 mol%, or 2.9 mol%, or 3.0 mol% oxygenates, based on the total moles of carbon in the rosin ester.

In an embodiment, the rosin ester contains less than, or equal to, 15 mole percent of a combined amount of unsaturated carbon and aromatic carbon, based on the total moles of carbon in the rosin ester. An "aromatic carbon" is a carbon atom contained in a ring structure (such as a $C_6$ ring structure) that has alternating single and double bonds. An "unsaturated carbon" is a carbon atom that is bonded to an adjacent carbon atom with a double covalent bond or a triple covalent bond. In an embodiment, the rosin ester contains from 0.05 mol%, or 0.1 mol%, or 0.5 mol%, or 1.0 mol%, or 2.0 mol%, or 3.0 mol%, or 4.0 mol%, or 5.0 mol%, or 6.0 mol%, or 7.0 mol%, or 8.0 mol%, or 9.0 mol%, or 10.0 mol%, or 11.0 mol%, or 12.0 mol%, or 12.4 mol% to 12.5 mol%, or 13.0 mol%, or 13.7 mol%, or 14.0 mol%, or 14.5 mol%, or 15.0 mol% of a combined amount of unsaturated carbon and aromatic carbon, based on the total moles of carbon in the rosin ester.

In an embodiment, the rosin ester contains from 0 mol%, or 0.05 mol%, or 0.08 mol%, or 0.10 mol% to 0.15 mol%, or 0.20 mol%, or 0.30 mol%, or 0.40 mol%, or 0.50 mol%, or 1.00 mol% of a combined amount of aldehyde group carbon and ketone group carbon, based on the total moles of carbon in the rosin ester. An "aldehyde group" is a moiety with the following Structure (II):

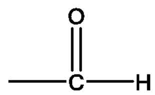

Structure (II). An "aldehyde group carbon" is the carbon atom of the Structure (II) aldehyde group, the carbon atom bonded to one oxygen atom with a double bond and a hydrogen atom with a single bond. A "ketone group" is a moiety with the following Structure (III):

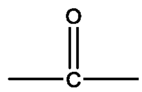

Structure (III). A "ketone group carbon" is the carbon atom of the Structure (III) ketone group, the carbon atom bonded to one oxygen atom with a double bond.

It is understood that the sum of the molar content of the aliphatic carbon, the ester group carbon, the oxygenates, the unsaturated carbon, the aromatic carbon, the aldehyde group carbon, and the ketone group carbon, yields 100 mole percent (mol%), based on the total moles of carbon in the rosin ester (i.e., the polymerized, esterified, and optionally hydrogenated polymeric structure).

In an embodiment, the rosin ester has a Ring and Ball softening temperature (measured in accordance with ASTM E 28) from 80°C, or 85°C, or 90°C, or 92°C, or 93°C, or 95°C, or 97°C to 100°C, or 105°C, or 108°C, or 110°C, or 120°C.

In an embodiment, the rosin ester has an acid number (measured in accordance with ASTM D 1386/7) from 15 mg KOH/g, or 20 mg KOH/g, or 25 mg KOH/g to 30 mg KOH/g, or 35 mg KOH/g, or 40 mg KOH/g, or 45 mg KOH/g, or 50 mg KOH/g, or 55 mg KOH/g, or 60 mg KOH/g, or 65 mg KOH/g, or 70 mg KOH/g.

In an embodiment, the rosin ester contains: (i) from 75 mol%, or 76 mol%, or 77 mol%, or 78 mol%, or 79 mol%, or 80 mol%, or 81 mol% to 83 mol%, or 84 mol%, or 85 mol%, or 86 mol%, or 87 mol%, or 88 mol%, or 89 mol%, or 90 mol%, or 91 mol%, or 92 mol%, or 93 mol%, or 94 mol%, or 95 mol% aliphatic carbon; and/or (ii) from 0.5 mol%, or 1.0 mol%, or 1.5 mol%, or 2.0 mol%, or 2.1 mol%, or 2.2 mol% to 2.4 mol%, or 2.5 mol%, or 2.6 mol%, or 2.7 mol%, or 2.8 mol%, or 2.9 mol%, or 3.0 mol% ester group carbon; and/or (iii) from 0.05 mol%, or 0.1 mol%, or 0.5 mol%, or 1.0 mol%, or 1.5 mol%, or 1.8 mol%, or 2.0 mol%, or 2.2 mol%, or 2.4 mol% to 2.5 mol%, or 2.6 mol%, or 2.7 mol%, or 2.8 mol%, or 2.9 mol%, or 3.0 mol% oxygenates; and/or (iv) from 0.05 mol%, or 0.1 mol%, or 0.5 mol%, or 1.0 mol%, or 2.0 mol%, or 3.0 mol%, or 4.0 mol%, or 5.0 mol%, or 6.0 mol%, or 7.0 mol%, or 8.0 mol%, or 9.0 mol%, or 10.0 mol%, or 11.0 mol%, or 12.0 mol%, or 12.4 mol% to 12.5 mol%, or 13.0 mol%, or 13.7 mol%, or 14.0 mol%, or 14.5 mol%, or 15.0 mol% of a combined amount of unsaturated carbon and aromatic carbon; and/or (v) from 0 mol%, or 0.05 mol%, or 0.08 mol%, or 0.10 mol% to 0.15 mol%, or 0.20 mol%, or 0.30 mol%, or 0.40 mol%, or 0.50 mol%, or 1.00 mol% of a combined amount of aldehyde group carbon and ketone group carbon, based on the total moles of carbon in the rosin ester. In an embodiment, the rosin ester has a Ring and Ball softening temperature from 80°C, or 85°C, or 90°C, or 92°C, or 93°C, or 95°C, or 97°C to 100°C, or 105°C, or 108°C, or 110°C, or 120°C; and/or an acid number from 15 mg KOH/g, or 20 mg KOH/g, or 25 mg KOH/g to 30 mg KOH/g, or 35 mg KOH/g, or 40 mg KOH/g, or 45 mg KOH/g, or 50 mg KOH/g, or 55 mg KOH/g, or 60 mg KOH/g, or 65 mg KOH/g, or 70 mg KOH/g. In a further embodiment, the rosin ester is a polymer

containing, in polymerized form, a rosin containing abietic acid and DCPD, which polymeric structure is then esterified with one or more polyols, and then the esterified polymeric structure is hydrogenated. In a further embodiment, the rosin ester is KOMOTAC™ KM-100, KOMOTAC™ KM-100W, or a combination thereof.

In an embodiment, the rosin ester is present in the composition in an amount from 20 wt%, or 25 wt%, or 30 wt%, or 35 wt%, or 40 wt% to 45 wt%, or 50 wt%, or 55 wt%, or 60 wt%, based on the total weight of the composition.

*C. Wax*

In an embodiment, the present composition includes an optional wax. The wax may be used to reduce the melt viscosity of the composition and to adjust the open time and set time of the composition. Nonlimiting examples of suitable wax include ethylene-based polymer wax, propylene-based polymer wax, paraffin wax, microcrystalline wax, by-product polyethylene wax, Fischer-Tropsch wax, oxidized Fischer-Tropsch wax, and functionalized wax such as hydroxy stearamide wax and fatty amide wax.

In an embodiment, the wax is a propylene-based polymer. A "propylene-based polymer wax" is a propylene-based polymer having a melt viscosity, at 170°C, that is less than, or equal to (≤) 1,000 mPa·s, or ≤ 500 mPa·s, or ≤ 100 mPa·s. The propylene-based polymer wax is composed of a majority amount (i.e., greater than 50 wt%) of polymerized propylene monomer and optional $\alpha$-olefin comonomer. In an embodiment, the propylene-based polymer wax is a propylene homopolymer. The propylene-based polymer wax may be produced by way of Ziegler-Natta catalyst polymerization or metallocene catalyst polymerization yielding a Ziegler-Natta catalyzed propylene-based polymer wax or a metallocene-catalyzed propylene-based polymer wax, respectively. In an embodiment, the propylene-based polymer wax is a propylene homopolymer, and excludes functionalized wax, polyethylene wax, Fischer-Tropsch wax, animal wax, plant wax, petroleum-derived wax (paraffin wax, microcrystalline wax), and montan wax. Nonlimiting examples of suitable propylene-based polymers are waxes sold under the tradename LICOCENE, available from Clariant. In an embodiment, the propylene-based polymer wax has one or both of the following properties: (i) a density from 0.89 g/cc, or 0.90 g/cc to 0.91 g/cc; and/or (ii) a melt viscosity, at 170°C, from 40 mPa·s, or 50 mPa·s, or 60 mPa·s to 65 mPa·s, or 70 mPa·s, or 75 mPa·s, or 80 mPa·s, or 90 mPa·s, or 100 mPa·s. In an embodiment, the propylene-based polymer wax is present in the composition in an amount from 0 wt%, or 1 wt%, or 2 wt%, or 3 wt%, or 4 wt%, or 5 wt%, or 10 wt % to 15 wt%, or 20 wt%, or 23 wt%, or 25 wt%, or 30 wt%, based on total weight of the composition.

In an embodiment, the wax is an ethylene-based polymer wax. An "ethylene-based polymer wax" is an ethylene-based polymer having a melt viscosity, at 140°C, that is less than, or equal to (≤) 1,000 mPa·s, or ≤ 500 mPa·s, or ≤ 100 mPa·s. The ethylene-based polymer wax is composed of a majority amount (i.e., greater than 50 wt%) of polymerized ethylene monomer and optional $\alpha$-olefin comonomer. In an embodiment, the ethylene-based polymer wax is selected from a high density, low molecular weight polyethylene wax, a by-product polyethylene wax, a Fischer-Tropsch wax containing an ethylene-based polymer, oxidized Fischer-Tropsch waxes containing an ethylene-based polymer, functionalized polyethylene waxes, and combinations thereof. In an embodiment, the ethylene-based polymer wax is not functionalized. In an embodiment, the ethylene-based polymer wax is a Fischer-Tropsch wax containing an ethylene-based polymer. Nonlimiting examples of Fischer-Tropsch waxes containing ethylene-based polymer include SASOL™ waxes such as SASOLWAX™ H1, available from the Sasol Wax Company. In an embodiment, the ethylene-based polymer wax has one or both of the following properties: (i) a density from 0.880 g/cc, or 0.885 g/cc, or 0.890 g/cc, or 0.895 g/cc, or 0.900 g/cc, or 0.910 g/cc, or 0.920 g/cc, or 0.930 g/cc to 0.940 g/cc, or 0.950 g/cc, or 0.960 g/cc, or 0.970 g/cc; and/or (ii) a melt viscosity, at 135°C, from 1 mPa•s, or 2 mPa•s, or 3 mPa•s, or 4 mPa•s, or 5 mPa•s, or 6 mPa•s, or 7 mPa•s, or 8 mPa•s, or 20 mPa•s, or 50 mPa•s, or 75 mPa•s, or 100 mPa•s, or 200 mPa•s, or 300 mPa•s, or 400 mPa•s to 500 mPa•s, or 750 mPa•s, or 1,000 mPa•s, or 1,500 mPa•s, or 2,000 mPa•s; and/or (iii) an acid value from 0 mg KOH/g, or 0.01 mg KOH/g to 0.1 mg KOH/g, or 0.2 mg KOH/g, as measured in accordance with ASTM D 1386/7; and/or (iv) a weight average molecular weight (Mw) from 600 g/mol, or 700 g/mol, or 750 g/mol, or 800 g/mol, or 850 g/mol, or 900 g/mol, or 1,000 g/mol, or 1,500 g/mol, or 2,000 g/mol, or 2,500 g/mol, or 3,000 g/mol to 50,000 g/mol, or 40,000 g/mol, or 30,000 g/mol, or 20,000 g/mol, or 15,000 g/mol, or 10,000 g/mol. In an embodiment, the ethylene-based polymer wax is present in the composition in an amount from 0 wt%, or 1 wt%, or 2 wt%, or 3 wt%, or 4 wt%, or 5 wt%, or 10 wt%, or 15 wt%, or 18 wt% to 20 wt%, or 23 wt%, or 25 wt%, or 30 wt%, based on total weight of the composition.

The wax may comprise two or more embodiments disclosed herein.

*D. Additives*

The present composition may include one or more optional additives. Nonlimiting examples of suitable additives include plasticizers, oils, stabilizers, antioxidants, pigments, dyestuffs, antiblock additives, polymeric additives, defoamers, preservatives, thickeners, rheology modifiers, humectants, fillers, solvents, nucleating agents, surfactants, chelating agents, gelling agents, processing aids, cross-linking agents, neutralizing agents, flame retardants, fluorescing agents,

compatibilizers, antimicrobial agents, water, and combinations thereof.

In an embodiment, the composition includes an antioxidant. The antioxidant protects the composition from degradation caused by reaction with oxygen induced by such things as heat, light, or residual catalyst from the raw materials such as the tackifying resin. Suitable antioxidants include high molecular weight hindered phenols and multifunctional phenols such as sulfur and phosphorous-containing phenol. Representative hindered phenols include; 1 ,3,5-trimethyl-2,4,6-tris-(3,5-di-tert-butyl-4-hydroxybenzyl)-benzene;pentaerythrityl tetrakis-3(3,5-d i-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-d i- tert-butyl-4-hydroxy-phenyl)-propionate]. Such antioxidants are commercially available from BASF and include Irganox™ 565, 1010, 1076 and 1726, which are hindered phenols. These are primary antioxidants act as radical scavengers and may be used alone or in combination with other antioxidants such as phosphite antioxidants like Irgafos™ 168, available from BASF. Phosphite antioxidant are considered secondary antioxidant and are not generally used alone. These are primarily used as peroxide decomposers. Other available antioxidants are Cyanox™ LTDP, available from Solvay, and Ethanox™ 330, available from SI Group. Many such antioxidants are available either to be used alone or in combination with other such antioxidants.

In an embodiment, the composition contains from 0 wt%, or 0.1 wt %, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt% of one of more additives, based on total weight of the composition.

*F. Composition*

In an embodiment, the composition is an adhesive composition, and further a hot melt adhesive (HMA) composition. In one embodiment, the composition comprises: (A) from 20 wt% to 60 wt% of the ethylene-based interpolymer (for example, an ethylene/α-olefin interpolymer); (B) from 20 wt% to 60 wt% of the rosin ester; and optionally, (C) from 1 wt% to 30 wt% wax; and optionally, (D) from 0.1 wt% to 3.0 wt% additive.

In an embodiment, the composition is an adhesive composition, and further a hot melt adhesive (HMA) composition, which comprises, or consists essentially of, or consists of: (A) from 20 wt%, or 25 wt%, or 30 wt%, or 35 wt%, or 40 wt% to 45 wt%, or 50 wt%, or 55 wt%, or 60 wt% ethylene-based interpolymer (for example, an ethylene/α-olefin interpolymer); (B) from 20 wt%, or 25 wt%, or 30 wt%, or 35 wt%, or 40 wt% to 45 wt%, or 50 wt%, or 55 wt%, or 60 wt% rosin ester; (C) from 0 wt%, or 1 wt%, or 2 wt%, or 3 wt%, or 4 wt%, or 5 wt%, or 10 wt%, or 15 wt%, or 18 wt% to 20 wt%, or 23 wt%, or 25 wt%, or 30 wt% of a wax; and (D) from 0 wt%, or 0.1 wt %, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt% of one or more additives, based on total weight of the composition. In a further embodiment, the wax is an ethylene-based polymer wax that has a melt viscosity, at 135°C, from 1 to 2,000 mPa•s, or from 1 to 1,000 mPa•s, or from 1 to 500 mPa•s, or from 1 to 100 mPa•s, or or from 1 to 50 mPa•s, or from 1 to 10 mPa•s, and density from 0.880 to 0.970 g/cc, or from 0.900 to 0.960 g/cc, or from 0.920 to 0.950 g/cc, or from 0.940 to 0.950 g/cc.

The combined amount of (A) ethylene-based interpolymer (for example, an ethylene/α-olefin interpolymer) and (B) rosin ester equals at least 60 wt% of the composition. In another embodiment, the combined amount of (A) ethylene-based interpolymer (for example, an ethylene/α-olefin copolymer) and (B) rosin ester equals from 60 wt%, or 65 wt%, or 70 wt%, or 75 wt% to 80 wt%, or 85 wt%, or 90 wt%, or 95 wt% of the total weight of the composition.

The weight ratio of the (A) ethylene-based interpolymer and (B) rosin ester is from 0.3:1.0 to 3.0:1.0. In an embodiment, the weight ratio of the (A) ethylene-based interpolymer (for example, an ethylene/α-olefin interpolymer) and (B) rosin ester is from 0.3:1.0, or 0.5:1.0, or 0.8:1.0, or 1.0:1.0 to 1.5:1.0, or 2.0:1.0, or 2.5:1.0, or 3.0:1.0. In another embodiment, the weight ratio of the (A) ethylene-based interpolymer (for example, an ethylene/α-olefin interpolymer) and (B) rosin ester is 1.0:1.0.

In an embodiment, the composition has a melt viscosity, at 177°C, from 500 mPa•s, or 750 mPa•s, or 800 mPa•s, or 850 mPa•s, or 900 mPa•s, or 950 mPa•s, or 980 mPa•s to 985 mPa•s, or 990 mPa•s, or 1,000 mPa•s, or 1,500 mPa•s, or 2,000 mPa•s, or 2,500 mPa•s, or 3,000 mPa•s. In another embodiment, the composition has a melt viscosity, at 177°C, from 500 to 3,000 mPa•s, or from 500 to 2,000 mPa•s, or from 500 to 1,200 mPa•s.

In an embodiment, the composition has a fiber tear greater than, or equal to (≥) 50%, or ≥ 55%, or ≥ 60%, or ≥ 65%, or ≥ 70%, or ≥ 75%, or ≥ 80%, or ≥ 85%, or ≥ 90%, or ≥ 95% at a temperature from -20°C, or 0°C to 23°C, or 60°C. In another embodiment, the composition has a fiber tear from 55%, or 60%, or 65%, or 70%, or 75%, or 80%, or 85%, or 90%, or 95% to 100% at a temperature from -20°C, or 0°C to 23°C, or 60°C.

In an embodiment, the composition has a heat stress ≥45°C, or ≥50°C, or ≥ 55°C, or ≥ 60°C. In an embodiment, the composition has a peel adhesion failure temperature (PAFT) ≥45°C, or ≥ 50°C, or ≥ 55°C, or ≥ 60°C, or from 45°C, or 50°C, or 55°C, or 60°C to 80°C. In another embodiment, the composition has a shear adhesion failure temperature (SAFT) ≥ 80°C, or from 80°C, or 84°C to 90°C, or 100°C, or 110°C, or 120°C.

In an embodiment, the composition has a set time of less than, or equal to (≤)15 seconds, or from 1 second to

14 seconds, or 15 seconds. In another embodiment, the composition has an open time ≥ 15 seconds, or ≥ 20 seconds, or ≥ 25 seconds.

In an embodiment, the composition is an adhesive composition, and further a hot melt adhesive (HMA) composition, which includes: (A) from 20 wt% to 60 wt% ethylene-based interpolymer (for example, an ethylene/$\alpha$-olefin copolymer); (B) from 20 wt% to 60 wt% rosin ester; optionally, (C) from 1 wt% to 30 wt% wax (for example, an ethylene-based polymer wax); and optionally, (D) from 0.1 wt% to 3.0 wt% additive; wherein the combined amount of (A) ethylene-based interpolymer (for example, an ethylene/$\alpha$-olefin interpolymer) and (B) rosin ester equals from 60 wt%, or 65 wt%, or 70 wt%, or 75 wt% to 80 wt%, or 85 wt%, or 90 wt%, or 95 wt% of the total weight of the composition and the weight ratio of the (A) ethylene-based interpolymer and (B) rosin ester is from 0.3:1.0, or 0.5:1.0, or 0.8:1.0, or 1.0:1.0 to 1.5:1.0, or 2.0:1.0, or 2.5:1.0, or 3.0:1.0; and the composition has one, some, or all of the following properties: (i) a melt viscosity, at 177°C, from 500 mPa•s, or 750 mPa•s, or 800 mPa•s, or 850 mPa•s, or 900 mPa•s, or 950 mPa•s, or 980 mPa•s to 985 mPa•s, or 990 mPa•s, or 1,000 mPa•s, or 1,500 mPa•s, or 2,000 mPa•s, or 2,500 mPa•s, or 3,000 mPa•s; and/or (ii) a fiber tear from 55%, or 60%, or 65%, or 70%, or 75%, or 80%, or 85%, or 90%, or 95% to 100% at a temperature from -20°C, or 0°C to 23°C, or 60°C; and/or (iii) a heat stress ≥45°C, or ≥50°C, or ≥ 55°C, or ≥ 60°C; and/or (iv) a PAFT of ≥45°C, or ≥ 50°C, or ≥ 55°C, or ≥ 60°C, or from 45°C, or 50°C, or 55°C, or 60°C to 80°C; and/or (v) a SAFT of ≥ 80°C, or from 80°C, or 84°C to 90°C, or 100°C, or 110°C, or 120°C; and/or (vi) a set time of ≤ 15 seconds, or from 1 second to 14 seconds, or 15 seconds; and/or (vii) an open time of ≥ 15 seconds, or ≥ 20 seconds, or ≥ 25 seconds. In a further embodiment, the composition has at least 2, or at least 3, or at least 4, or at least 5, or at least 6, or all 7 of the above properties (i)-(vii).

It is understood that the sum of the components in each of the compositions disclosed herein, including the foregoing compositions, yields 100 weight percent (wt%).

The composition may comprise two or more embodiments disclosed herein.

*G. Article*

The present disclosure provides an article. The article includes at least one component formed from the present composition. The composition can be any composition as disclosed above. In an embodiment, the composition is an HMA composition. Nonlimiting examples of suitable articles include HMA bonded cardboard packaging boxes, multilayer articles, wood articles and non-woven articles. In an embodiment, that article includes a substrate. The composition is on at least one surface of the substrate. Nonlimiting examples of suitable substrates include film, sheets, fabric, cardboard and wood. In an embodiment, the composition forms a seal between the at least one surface of the substrate and at least one surface of another substrate.

The present article may comprise two or more embodiments disclosed herein.

TEST METHODS

Acid value (or acid number) was measured in accordance with ASTM D 1386/7. Acid value is a measure of the amount of unreacted fatty acid present in a substance. The acid value is the number of milligrams of potassium hydroxide required for the neutralization of free fatty acids present in one gram of a substance (e.g., the rosin ester). Units for acid value are mg KOH/g.

Density was measured in accordance with ASTM D792, Method B. The result was recorded in grams (g) per cubic centimeter (g/cc or g/cm$^3$).

Fiber Tear (%) Percent fiber tear (FT) of compositions using Inland corrugated cardboard was determined according to a standardized method. The sample composition was heated to 177°C and a strip of sample composition (about 5 mm wide) (about 0.12-0.13 gram) was applied on to a cardboard coupon (25.4 mm × 76.2 mm) by drawing the sample composition lengthwise down the cardboard coupon with a spatula or hot melt applicator, and a second coupon was quickly placed (within 2 seconds) on top of the sample composition. Light finger pressure, for about 5 seconds, was applied to hold the bond in place. Samples were conditioned for 24 hours at room temperature and 54 % relative humidity. Immediately after conditioning, samples (n=5) were pulled apart by inserting the blade of a spatula under one corner to fold up the corner. The sample was then placed on a horizontal surface, with the side having the folded corner facing up. With the sample held as near as possible to a heating or cooling source set at the test temperature, the folded corner is manually pulled as rapidly as possible at approximately a 45-90° angle, relative to each coupon's lengthwise axis, to tear the adhesive bond. The percent of torn fiber (fiber tear) was estimated in 25% increments (that is, 0%, 25%, 50%, 75%, and 100%), and the average was recorded.

Heat stress resistance (heat stress) was measured according to the "Suggested Test Method for Determining the Heat Stress Resistance of Hot Melt Adhesives," method T-3006, prepared by the Institute of Packaging Professions (IoPP). To prepare one sample, two cardboard coupons (cut with flutes running in the long direction) having dimensions of 2 inches (50.8 mm) × 3-3/16 in (81 mm) and 2 in (50.8 mm) × 5-1/2 in (139.7 mm) were bonded by applying 0.00014lb/in

of the composition (about 0.12-0.13 gram) using an Olinger Bond Tester (application temperature 177°C), and this tester was used to compress the coupons at a constant pressure, and without a further application of heat. The composition was applied perpendicular to the flutes in the center of the shorter coupon and the coupons were bonded such that the composition was ¾ in (19 mm) from one end of the long coupon. Five replicates were made for each composition. Each coupon was stored for 24 hours, at 22°C-23°C, and 50% relative humidity. As shown in Figure 1, samples (10) were then loaded into a sample holder (12), with the short coupon end aligned with the edge of the sample holder (12), as shown in Figure 1. The samples (10) were held in place with a wide plate (14) of the sample holder (10), and the plate (14) was secured by wingnuts (16) to the sample holder (12). A "200 g" weight (18) was attached to the coupon (20), at a distance of 3.94 in (100 mm) from the bond. The weight (18) was secured by placing the peg attached to the weight into a hole made in the end of the longer coupon. The sample holder (12), containing the coupon (20) and the attached weight (18), was then placed into a convection oven (not shown), equilibrated at a set temperature, and remained in the oven for 24 hours. At the end of the 24 hours, if at least 80% of the bonds (i.e., 4 bonds) do not fail, then the sample is considered to have passed heat resistance testing at the test temperature. The oven temperature was varied, until the maximum passing heat stress resistance (temperature) was determined. All new bonded coupon samples were used for each test temperature. Results are reported as heat stress temperature (°C).

Melt viscosity was measured in accordance with ASTM D 3236 using a Brookfield Viscometer (Model DV0III, version 3), and a SC-31 hot-melt viscometer spindle, at 177°C for the ethylene-based interpolymer, and further the ethylene/$\alpha$-olefin copolymer; at 177°C for the composition; at 135°C for the ethylene-based polymer wax; and at 170°C for the propylene-based polymer wax. The sample was poured into an aluminum disposable tube-shaped chamber, which was, in turn, inserted into a Brookfield Thermosel, and locked into place. The sample chamber has a notch on the bottom that fits the bottom of the Brookfield Thermosel, to ensure that the chamber is not allowed to turn, when the spindle is inserted and spinning. The sample (approximately 8-10 grams) was heated to the required temperature until the melted sample was one inch below the top of the sample chamber. The viscometer apparatus was lowered, and the spindle submerged into the middle of the sample chamber, wherein the spindle did not touch the sides of the chamber. Lowering was continued, until the brackets on the viscometer align on the Thermosel. The viscometer was turned on, and set to operate at a steady shear rate, which leads to a torque reading in the range of 40 to 60 percent of the total torque capacity, based on the rpm output of the viscometer. Readings were taken every minute for 15 minutes, or until the values stabilize, at which point, a final reading was recorded.

Ring-and-ball softening point was measured using a Mettler Toledo FP900 Thermosystem according to ASTM E28.

*Differential Scanning Calorimetry (DSC)*

Differential Scanning Calorimetry (DSC) can be used to measure the melting, crystallization, and glass transition behavior of a polymer over a wide range of temperature. For example, the

TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at 190°C; the melted sample was then air-cooled to room temperature (25°C). A 3-10 mg, 6 mm diameter specimen was extracted from the cooled polymer, weighed, placed in a light aluminum pan (50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C and held isothermal for 3 minutes in order to remove its thermal history. Next, the sample was cooled to -80°C at a 10°C/minute cooling rate and held isothermal at -80°C for 3 minutes. The sample was then heated to 180°C (this is the "second heat" ramp) at a 10°C/minute heating rate. The cooling and second heating curves were recorded. The values determined are extrapolated onset of melting, $T_m$, and extrapolated onset of crystallization, $T_c$.

Melting point, $T_m$, was determined from the DSC heating curve by first drawing the baseline between the start and end of the melting transition. A tangent line was then drawn to the data on the low temperature side of the melting peak. Where this line intersects the baseline is the extrapolated onset of melting ($T_m$). This is as described in Bernhard Wunderlich, The Basis of Thermal Analysis, in Thermal Characterization of Polymeric Materials 92, 277-278 (Edith A. Turi ed., 2d ed. 1997).

Glass transition temperature, $T_g$, was determined from the DSC heating curve where half the sample has gained the liquid heat capacity as described in Bernhard Wunderlich, The Basis of Thermal Analysis, in Thermal Characterization of Polymeric Materials 92, 278-279 (Edith A. Turi ed., 2d ed. 1997). Baselines were drawn from below and above the glass transition region and extrapolated through the $T_g$ region. The temperature at which the sample heat capacity was half-way between these baselines is the $T_g$.

*Gel Permeation Chromatography (GPC) for molecular weight*

A high temperature gel permeation chromatography (GPC) system, equipped with Robotic Assistant Deliver (RAD) system was used for sample preparation and sample injection. The concentration detector was an Infra-red detector (IR-5) from Polymer Char Inc. (Valencia, Spain). Data collection was performed using a Polymer Char DM 100 Data acquisition box. The carrier solvent was 1,2,4-trichlorobenzene (TCB). The system was equipped with an on-line solvent degas device from Agilent. The column compartment was operated at 150°C. The columns were four Mixed A LS 30 cm, 20 micron columns. The solvent was nitrogen-purged 1,2,4-trichlorobenzene (TCB) containing approximately 200 ppm 2,6-di-t-butyl-4-methylphenol (BHT). The flow rate was 1.0 mL/min, and the injection volume was 200 µl. A "2 mg/mL" sample concentration was prepared by dissolving the sample in $N_2$ purged and preheated TCB (containing 200 ppm BHT), for 2.5 hours at 160°C, with gentle agitation.

The GPC column set was calibrated by running twenty narrow molecular weight distribution polystyrene standards. The molecular weight (MW) of the standards ranges from 580 g/mol to 8,400,000 g/mol, and the standards were contained in six "cocktail" mixtures. Each standard mixture had at least a decade of separation between individual molecular weights. The equivalent polypropylene molecular weights of each PS standard were calculated by using following equation, with reported Mark-Houwink coefficients for polypropylene (Th.G. Scholte, N.L.J. Meijerink, H.M. Schoffeleers, & A.M.G. Brands, J. Appl. Polym. Sci., 29, 3763-3782 (1984)) and polystyrene (E.P. Otocka, R.J. Roe, N.Y. Hellman, & P.M. Muglia, Macromolecules, 4, 507 (1971)):

$$M_{PP} = \left(\frac{K_{PS} M_{PS}^{a_{PS}+1}}{K_{PP}}\right)^{\frac{1}{a_{PP}+1}} \quad \text{(Eq 1)},$$

where $M_{pp}$ is PP equivalent MW, $M_{PS}$ is PS equivalent MW, log *K* and *a* values of Mark-Houwink coefficients for PP and PS are listed below.

| Polymer | *a* | log *K* |
|---|---|---|
| Polypropylene | 0.725 | -3.721 |
| Polystyrene | 0.702 | -3.900 |

A logarithmic molecular weight calibration was generated using a fourth order polynomial fit as a function of elution volume. Number average and weight average molecular weights were calculated according to the following equations:

$$M_n = \frac{\sum^i Wf_i}{\sum^i \left(Wf_i / M_i\right)} \quad \text{(Eq 2)},$$

$$M_w = \frac{\sum^i (Wf_i * M_i)}{\sum^i (Wf_i)} \quad \text{(Eq 3)},$$

where $Wf_i$ and $M_i$ are the weight fraction and molecular weight of elution component i, respectively.

The mass detector constant, laser light scattering detector constant and viscometer detector constant were determined using a standard reference (reference polymer is a linear polyethylene homopolymer) with a known value of weight average molecular weight (Mw = 120,000 g/mol; *dn/dc*= -0.104 mL/g; MWD = 2.9) and intrinsic viscosity (1.873 dL/g). The chromatographic concentrations were assumed low enough to eliminate addressing second Virial coefficient effects (concentration effects on molecular weight).

The Systematic Approach for the determination of detector offset was implemented in a manner consistent with that published by Balke & Mourey et. al.(Mourey & Balke, Chromatography Polym. Chpt 12, (1992)) (Balke, Thitiratsakul, Lew, Cheung & Mourey, Chromatography Polym. Chpt 13, (1992)), using data obtained from the two detectors, while analyzing a standard reference (a linear polyethylene homopolymer) with a known value of weight average molecular weight (Mw = 120,000 g/mol; *dn/dc*= -0.104 mL/g; MWD = 2.9) and intrinsic viscosity (1.873 dL/g) and narrow polystyrene

standards. The Systematic Approach was used to optimize each detector offset to give molecular weight results as close as possible to those observed using the conventional GPC method.

The absolute weight average molecular weight Mw of the samples were characterized by the LS detector and IR-5 concentration detector using following equation:

$$Mw(abs) = K_{LS} * \frac{\sum(LS_i)}{\sum(IR_i)} \quad \text{(Eq 4)},$$

where $\Sigma(LS_i)$ is the response area of the LS detector, $\Sigma(IR_i)$ is the response area of the IR-5 detector, and $K_{LS}$ is the instrument constant which was determined using the standard reference (a linear polyethylene homopolymer) with a known value of weight average molecular weight (Mw = 120,000 g/mol; *dn*/*dc* = -0.104 mL/g; MWD = 2.9), intrinsic viscosity (1.873 dL/g) and concentration.

*Peel Adhesion Failure Temperature (PAFT)and Shear Adhesion Failure Temperature (SAFT)*

Peel adhesion failure temperature (PAFT) was tested according to ASTM D 4498 with a 100 gram weight in the peel mode. The tests were started at room temperature (25°C/77°F) and the temperature was increased at an average rate of 0.5°C/minute.

Shear Adhesion Failure Temperature (SAFT) was measured according to ASTM D 4498 with a 500 gram weight in the shear mode. The tests were started at room temperature (25°C/77°F) and the oven temperature was ramped at an average rate of 0.5°C/minute. The temperature at which the specimen failed is recorded.

Samples for PAFT and SAFT testing were prepared using two sheets of 40 pound Kraft paper, each of 6 × 12 in (152 × 305 mm) dimensions. On the bottom sheet, lengthwise and separated by a gap of 1 in (25 mm), were adhered in parallel fashion two 1.75 in or 2 in (45 mm or 51 mm) wide strips of a one sided, pressure-sensitive tape such as masking tape. The composition sample to be tested was heated to 177°C (350°F) and drizzled in an even manner down the center of the gap formed between the tape strips. Then, before the composition can unduly thicken, two glass rods, one rod riding immediately upon the tapes and shimmed on each side of the gap with a strip of the same tape followed by the second rod and (between the two rods) the second sheet of paper, were slid down the length of the sheets. This was done in a fashion such that the first rod evenly spreads the composition in the gap between the tape strips and the second rod evenly compress the second sheet over the top of the gap and on top of the tape strips. Thus, a single 1 inch (25.4 mm) wide strip of sample composition was created between the two tape strips, and bonding the paper sheets. The sheets so bonded were cut crosswise into strips of width 1 inch (25.4 mm) and length of 3 inches (76.2 mm), each strip having a 1 × 1 in (25 × 25 mm) adhesive sample bond in the center. The strips were conditioned for 24 hours at room temperature (23°C) and 54% relative humidity. The strips were then be employed in the PAFT and SAFT testing, as desired. Two specimens from each compositions sample were tested, and the average failure temperature for PAFT and SAFT was recorded.

*Open Time and Set Time*

Set Time and Open Time properties were determined using the Olinger Bond Tester, a mechanical testing device used to form and tear test bonds. The Olinger Bond Tester was heated to 350°C (177°C). The bottom substrate, 2.5" (63.5 mm) × 2" (50.8 mm) corrugated board, moved on a track under the adhesive pot which delivered a bead of polymer approximately 1/16" (1.6 mm) to 1/8" (3.2 mm) wide, and 1" (25.4 mm) long. The adhesive pot pressure was increased, or decreased, in order to maintain consistent bead size. A top substrate, 2.5" (63.5 mm) × 2" (50.8 mm), was applied to the bottom substrate, with a pressure of 2 bars. The Olinger has 2 timers, capable of measuring set-time and open-time potential to the nearest second.

*Open Time measurement*-is the longest time period between adhesive application to one substrate, and the bonding with a second substrate, that results in a 50% fiber-tearing bond. For testing, compression time (or set time) was set to the time determined by set time measurement to achieve 100% fiber tear. Open time was set at 10 seconds and increased in 10 second intervals until less than 50% fiber tear was achieved. The open time was decreased by 5 sec and % fiber tear was determined. Finally, open time was changed by 1 second interval to determine the maximum allowable time to achieve 50% or greater fiber tear.

*Set Time measurement*-is the minimum compression time required to achieve a fiber-tearing bond. For testing, open time was set at 2 seconds (sec). A bond was formed as the top substrate was compressed onto the bottom substrate. After a preset compression time, a tear test was executed as the top substrate was pulled from the bottom substrate. A visual assessment was then made to determine the percentage of fiber tear achieved under the preset test conditions. The set time was changed in one second intervals, determining the time to achieve 100% fiber tear and less

than 50% fiber tear. The set time was recorded as the shortest time, to the nearest second, at which a minimum of 50% fiber tear was obtained.

*$^{13}C$ NMR experimental procedure for rosin ester*

$^{13}C$ NMR was used for aliphatic carbon content, oxygenates content, aromatic carbon content, unsaturated carbon content, ester group content, aldehyde group content, and ketone group content, and is performed as follows:
*Sample Preparation (rosin ester)*-The samples were prepared in tetrachloroethane-$d_2$ by adding approximately 2.7g of tetrachloroethane-$d_2$ containing 0.025 M $Cr(AcAc)_3$ to 0.20 - 0.30g sample in a Norell 1001-7 10mm NMR tube. The samples were dissolved and homogenized by heating the tube and its contents to 150°C using a heating block and heat gun. Each sample was visually inspected to ensure homogeneity.
*Data Acquisition Parameters (rosin ester)*-The data was collected using a Bruker 400 MHz spectrometer equipped with a Bruker Dual DUL high-temperature CryoProbe. The data was acquired using 160 scans per data file, a 6 sec pulse repetition delay, 90 degree flip angles, and inverse gated decoupling with a sample temperature of 120°C. The acquisitions were carried out using a spectral width of 25,000 Hz and a file size of 32K data points. The integral ranges used for quantitation of aliphatic carbon content, oxygenates content, aromatic carbon content, unsaturated carbon content, ester group content, aldehyde group content, and ketone group content are listed below.

| $^{13}C$ NMR Integral Ranges Used for Quantitation | |
|---|---|
| Component | Peak(s) Integrated |
| Aldehylde/Ketone Carbonyl | about 200 to 202 ppm |
| Ester Carbonyl | about 175 to 182 ppm |
| Unsaturated/Aromatic Carbon | about 100 to 150 ppm |
| Oxygenates ($-O-CH_{(n)}-$) (likely, the "non-carbonyl carbon" connected to the divalent oxygen of an ester group, or the carbon of an ether group) | about 61 to 71 ppm |
| Aliphatic Carbon | about 10 to 61 ppm |

Some embodiments of the present disclosure will now be described in detail in the following Examples.

EXAMPLES

Materials used to produce compositions, further hot melt adhesive compositions, are shown in Table 1 below. The starting materials from Table 1 are weighed into an iron container, preheated in an oven at 177°C for 1 hour, and then melt blended in a heated block at 177°C for 30 minutes with a "Paravisc style" mixed head at 100 rotations per minute (rpm). The compositions and their application performance data are provided in Table 2 below.

Table 1. Starting materials for compositions

| Component | Specification | Source |
|---|---|---|
| AFFINITY GA 1950 | ethylene/1-octene copolymer (ethylene plastomer/elastomer) density = 0.874 g/cc glass transition temperature ($T_g$) = -56.1 °C melt viscosity at 177°C (Brookfield) = 17,000 mPa•s melting point = 70°C | The Dow Chemical Co. |
| AFFINITY GA 1900 | ethylene/1-octene copolymer (ethylene plastomer/elastomer) density = 0.870 g/cc glass transition temperature ($T_g$) = -57.8°C melt viscosity at 177°C (Brookfield) = 8,200 mPa•s melting point = 67.8°C | The Dow Chemical Co. |
| AFFINITY GA 1875 | ethylene/1-octene copolymer (ethylene plastomer/elastomer) density = 0.870 g/cc glass transition temperature ($T_g$) = -57.0°C melt viscosity at 177°C (Brookfield) = 6,700 mPa•s melting point = 70.0°C | The Dow Chemical Co. |
| KOMOTAC KM-100 (KM-100) | Rosin ester ring and ball softening point = 92-100°C color, Gardner (ASTM D1544) = 5 Acid number = 25 mg KOH/g Aliphatic Carbon# = 82.8 mol% Ester Group Carbon# = 2.2 mol% Oxygenates# = 2.5 mol% Combined Amount Unsaturated Carbon and Aromatic Carbon#= 12.4 mol% Combined Amount Aldehyde Group Carbon and Ketone Group Carbon#=0.1mol% | Guangdong Komo Co., Ltd. |

(continued)

| Component | Specification | Source |
|---|---|---|
| KOMOTAC KM-100W (KM-100W) | Rosin ester Acid number = 18.6 mg KOH/g ring and ball softening point = 100°C Aliphatic Carbon$^{\#}$ = 81.4 mol% Ester Group Carbon$^{\#}$ = 2.4 mol% Oxygenates$^{\#}$ = 2.4 mol% Combined Amount Unsaturated Carbon and Aromatic Carbon$^{\#}$ = 13.7 mol% Combined Amount Aldehyde Group Carbon and Ketone Group Carbon$^{\#}$=0.1 mol% | Guangdong Komo Co., Ltd. |
| KOMOTAC 146 | Rosin ester ring and ball softening point = 99-107°C color, Gardner (ASTM D1544) = 4-6 Acid number = 40 mg KOH/g Aliphatic Carbon$^{\#}$ = 69.8 mol% Ester Group Carbon$^{\#}$ = 4.6 mol% Oxygenates$^{\#}$ = 4.6mol% Combined Amount Unsaturated Carbon and Aromatic Carbon$^{\#}$= 21.0mol% Combined Amount Aldehyde Group Carbon and Ketone Group Carbon$^{\#}$=0mol% | Guangdong Komo Co., Ltd. |
| EASTOTAC H100W (H100W) | Tackifier-hydrogenated hydrocarbon resin density = 1.04 g/mL Acid number = <0.1 mg KOH/g ring and ball softening point = 100°C form = Flake melt viscosity at 190°C (Brookfield) = 200 mPa•s color, Gardner (ASTM D1544) = <1 Ester Group Carbon" < 0.5 mol% Aliphatic Carbon" > 99.9 mol% | Eastman |
| SASOLWAX HI | Fischer-Tropsch (FT) wax containing an ethylene-based polymer density = 0.90 g/cc (at 25°C) drop point = 112°C melt viscosity at 135°C (Brookfield) = 8 mPa•s melting point = > 90°C Mw = 880 Dalton (880 g/mol) acid value = < 0.1 mg KOH/g | Sasol Wax Company |
| IRGANOX 1010 (AO) | Antioxidant pentaerythritol tetrakis(3-(3,5-di-tert-butyl-4-hydroxyphenyl) propionate) (CAS 6683-19-8) density = 1.15 g/cc | BASF |
| "As measured by $^{10}C$ NMR, based on the total moles of carbon in the rosin ester.<br>"As measured by $^{13}C$ NMR, based on the total moles of carbon in the hydrogenated hydrocarbon resin. | | |

Table 2. Compositions*

| | Ex. 1 | Ex. 2 | Ex. 3 | Ex. 4 | Ex. 5 | Ex. 6 | CS 1 | CS 2 | |
|---|---|---|---|---|---|---|---|---|---|
| AFFINITY GA 1950 | 40 | 40 | - | - | - | - | 40 | 40 | |
| AFFINITY GA 1900 | - | - | 40 | 40 | - | - | - | - | |
| AFFINITY GA 1875 | - | - | - | - | 40 | 40 | - | - | |
| KM-100 (rosin ester) | - | 39.5 | 39.5 | - | 39.5 | - | - | - | |
| KM-100W (rosin ester) | 39.5 | - | - | 39.5 | - | 39.5 | - | - | |
| KOMOTAC 146 (rosin ester) | - | - | - | - | - | - | - | 39.5 | |
| H100W (tackifier) | - | - | - | - | - | - | 39.5 | - | |
| SASOL WAX H1 (wax) | 20 | 20 | 20 | 20 | 20 | 20 | 20 | 20 | |
| AO | 0.5 | 0.5 | 0.5 | 0.5 | 0.5 | 0.5 | 0.5 | 0.5 | |
| Total | 100 | 100 | 100 | 100 | 100 | 100 | 100 | 100 | |
| Viscosity† @ 177°C mPa•s | 1068 | 1065 | 665 | 664 | 564 | 561 | 1170 | 1812 | |
| Set Time (sec) | | 2 | 2 | 2 | 2 | 2 | 2 | 2 | 5 |
| Open Time (sec) | | 28 | 28 | 28 | 28 | 28 | 28 | 55 | 8 |
| Heat Stress (°C) | | 58.0 | 58.0 | 50.0 | 50.0 | 46.0 | 48.0 | 54.0 | <40 |
| PAFT (°C) | | 59.0 | 60.3 | 50.4 | 51.5 | 47.3 | 48.2 | 57.0 | 47.3 |
| SAFT (°C) | | 89.3 | 91.5 | 89.3 | 88.7 | 89.3 | 88.5 | 91.4 | 92.5 |

(continued)

| | Ex. 1 | Ex. 2 | Ex. 3 | Ex. 4 | Ex. 5 | Ex. 6 | CS 1 | CS 2 | |
|---|---|---|---|---|---|---|---|---|---|
| Fiber Tear (%) | -20°C | 100 | 96 | 100 | 95 | 82 | 89 | 98 | 63 |
| | 0°C | 98 | 100 | 98 | 100 | 100 | 98 | 100 | 94 |
| | 23°C | 100 | 100 | 100 | 100 | 100 | 100 | 100 | 87 |
| | 60°C | 97 | 99 | 93 | 90 | 84 | 88 | 88 | 62 |

CS = Comparative Sample
NM = Not Measured
* Table 2 values are weight percent (wt%), based on the total weight of the composition
† Viscosity of the composition

It has been discovered that compositions containing an ethylene/1-octene interpolymer (AFFINITY GA 1950), and a rosin ester containing greater than, or equal to, 75 mol% aliphatic carbon, and less than, or equal to, 3.0 mol% ester group carbon, based on total moles of carbon in the rosin ester (KOMOTAC™ KM-100 or KOMOTAC™ KM-100W), exhibit (i) higher a peel adhesion failure temperature (PAFT) (≥ 55°C); (ii) higher heat stress (≥55°C); and (iii) higher fiber tear (≥95%) in the range of -20°C to 60°C, than a comparative composition containing ethylene/1-octene interpolymer (AFFINITY GA 1950) and a hydrogenated hydrocarbon (i.e., EASTOTAC H100W) (*Compare* Ex. 1-2 with CS 1).

CS 2, a comparative composition containing ethylene/1-octene interpolymer (AFFINITY GA 1950) and a rosin ester containing greater than 3.0 mol% ester group carbon (KOMOTAC 146) exhibits higher viscosity, longer set time, shorter open time, and lower fiber tear at -20°C and 60°C than compositions containing an ethylene/1-octene interpolymer (AFFINITY GA 1950) and a rosin ester containing less than, or equal to, 3.0 mol% ester group carbon (KOMOTAC™ KM-100 or KOMOTAC™ KM-100W) (Ex. 1, Ex. 2) because the ethylene/1-octene interpolymer (AFFINITY GA 1950) was incompatible with the rosin ester containing greater than 3.0 mol% ester group carbon (KOMOTAC™ 146).

## Claims

**1.** A composition comprising the following:

(A) an ethylene-based interpolymer having the following:

(i) a density from 0.860 g/cc to 0.900 g/cc; and
(ii) a melt viscosity, at 177°C, less than, or equal to, 50,000 mPa•s; and

(B) a rosin ester comprising the following:

(i) greater than, or equal to, 75 mol% aliphatic carbon, based on total moles of carbon in the rosin ester; and
(ii) less than, or equal to, 3.0 mol% ester group carbon, based on total moles of carbon in the rosin ester;

wherein the combined amount of the (A) ethylene-based interpolymer and the (B) rosin ester equals at least 60 wt% of the composition; and wherein the weight ratio of the (A) ethylene-based interpolymer and the (B) rosin ester is from 0.3:1.0 to 3.0:1.0.

**2.** The composition of claim 1, wherein the rosin ester comprises from 75 mol% to 95 mol% aliphatic carbon, based on total moles of carbon in the rosin ester.

**3.** The composition of claim 1 or claim 2, wherein the rosin ester comprises from 0.5 mol% to 3.0 mol% ester group carbon, based on the total moles of carbon in the rosin ester.

**4.** The composition of any one of claims 1-3, further comprising (C) an ethylene-based polymer wax that has a melt viscosity, at 135°C, from 1 to 2,000 mPa•s, and a density from 0.880 to 0.970 g/cc.

**5.** The composition of claim 4, wherein the weight ratio of the (A) ethylene-based interpolymer to the (C) ethylene-based polymer wax is from 1.5:1.0 to 5.0:1.0.

6. The composition of claim 4 or claim 5, wherein the weight ratio of the (B) rosin ester to the (C) ethylene-based polymer wax is from 1.5:1.0 to 5.0:1.0.

7. The composition of any one of claims 1-6 comprising:

(A) from 20 wt% to 60 wt% of the ethylene-based interpolymer, and wherein the interpolymer has a melt viscosity, at 177°C, from 500 mPa•s to 20,000 mPa•s;
(B) from 20 wt% to 60 wt% of the rosin ester; each wt% based on the total weight of the composition; and the composition has a melt viscosity at 177°C from 500 mPa•s to 3,000 mPa•s; and wherein the composition has a peel adhesion failure temperature greater than, or equal to, 55°C.

8. An article comprising at least one component formed from the composition of any one of the previous claims.

**Patentansprüche**

1. Eine Zusammensetzung, die Folgendes beinhaltet:

(A) ein Interpolymer auf Ethylenbasis, das Folgendes aufweist:

(i) eine Dichte von 0,860 g/cm$^3$ bis 0,900 g/cm$^3$; und
(ii) eine Schmelzviskosität bei 177 °C von weniger als oder gleich 50 000 mPa·s; und

(B) einen Kolophoniumester, der Folgendes beinhaltet:

(i) zu mehr als oder gleich 75 Mol-% aliphatischen Kohlenstoff, bezogen auf die Gesamtheit an Molen Kohlenstoff in dem Kolophoniumester; und
(ii) zu weniger als oder gleich 3,0 Mol-% Estergruppen-Kohlenstoff, bezogen auf die Gesamtheit an Molen Kohlenstoff in dem Kolophoniumester;

wobei die kombinierte Menge des (A) Interpolymers auf Ethylenbasis und des (B) Kolophoniumesters gleich mindestens 60 Gew.-% der Zusammensetzung ist; und wobei das Gewichtsverhältnis des (A) Interpolymers auf Ethylenbasis und des (B) Kolophoniumesters 0,3 : 1,0 bis 3,0 : 1,0 beträgt.

2. Zusammensetzung gemäß Anspruch 1, wobei der Kolophoniumester zu 75 Mol-% bis 95 Mol-% aliphatischen Kohlenstoff beinhaltet, bezogen auf die Gesamtheit an Molen Kohlenstoff in dem Kolophoniumester.

3. Zusammensetzung gemäß Anspruch 1 oder Anspruch 2, wobei der Kolophoniumester zu 0,5 Mol-% bis 3,0 Mol-% Estergruppen-Kohlenstoff beinhaltet, bezogen auf die Gesamtheit an Molen Kohlenstoff in dem Kolophoniumester.

4. Zusammensetzung gemäß einem der Ansprüche 1-3, ferner beinhaltend (C) ein Polymerwachs auf Ethylenbasis, das bei 135 °C eine Schmelzviskosität von 1 bis 2000 mPa·s und eine Dichte von 0,880 g/cm$^3$ bis 0,970 g/cm$^3$ aufweist.

5. Zusammensetzung gemäß Anspruch 4, wobei das Gewichtsverhältnis des (A) Interpolymers auf Ethylenbasis zu dem (C) Polymerwachs auf Ethylenbasis 1,5 : 1,0 bis 5,0 : 1,0 beträgt.

6. Zusammensetzung gemäß Anspruch 4 oder Anspruch 5, wobei das Gewichtsverhältnis des (B) Kolophoniumesters zu dem (C) Polymerwachs auf Ethylenbasis 1,5 : 1,0 bis 5,0 : 1,0 beträgt.

7. Zusammensetzung gemäß einem der Ansprüche 1-6, die Folgendes beinhaltet:

(A) zu 20 Gew.-% bis 60 Gew.-% das Interpolymer auf Ethylenbasis und wobei das Interpolymer bei 177 °C eine Schmelzviskosität von 500 mPa·s bis 20 000 mPa·s \ aufweist;
(B) zu 20 Gew.-% bis 60 Gew.-% den Kolophoniumester; wobei sich jedes Gew.-% auf das Gesamtgewicht der Zusammensetzung bezieht; und wobei die Zusammensetzung bei 177 °C eine Schmelzviskosität von 500 mPa·s bis 3000 mPa·s aufweist; und wobei die Zusammensetzung eine Schäladhäsionsversagetemperatur von mehr als oder gleich 55 °C aufweist.

8. Ein Artikel, beinhaltend mindestens eine Komponente, die aus der Zusammensetzung gemäß einem der vorhergehenden Ansprüche gebildet ist.

## Revendications

1. Une composition comprenant ce qui suit :

   (A) un interpolymère à base d'éthylène ayant ce qui suit :

      (i) une masse volumique allant de 0,860 g/$cm^3$ à 0,900 g/$cm^3$ ; et
      (ii) une viscosité à l'état fondu, à 177 °C, inférieure ou égale à 50 000 mPa•s ; et

   (B) un ester de colophane comprenant ce qui suit :

      (i) un pourcentage supérieur ou égal à 75 % en moles de carbone aliphatique, rapporté aux moles totales de carbone dans l'ester de colophane ; et
      (ii) un pourcentage inférieur ou égal à 3,0 % en moles de carbone de groupe ester, rapporté aux moles totales de carbone dans l'ester de colophane ;

   dans laquelle la quantité combinée de (A) l'interpolymère à base d'éthylène et de (B) l'ester de colophane est égale à au moins 60 % en poids de la composition ; et dans laquelle le rapport en poids de (A) l'interpolymère à base d'éthylène et de (B) l'ester de colophane va de 0,3/1,0 à 3,0/1,0.

2. La composition de la revendication 1, dans laquelle l'ester de colophane comprend de 75 % en moles à 95 % en moles de carbone aliphatique, rapporté aux moles totales de carbone dans l'ester de colophane.

3. La composition de la revendication 1 ou de la revendication 2, dans laquelle l'ester de colophane comprend de 0,5 % en moles à 3,0 % en moles de carbone de groupe ester, rapporté aux moles totales de carbone dans l'ester de colophane.

4. La composition de l'une quelconque des revendications 1 à 3, comprenant en outre (C) une cire polymère à base d'éthylène qui a une viscosité à l'état fondu, à 135 °C, allant de 1 à 2 000 mPa·s, et une masse volumique allant de 0,880 à 0,970 g/$cm^3$.

5. La composition de la revendication 4, dans laquelle le rapport en poids de (A) l'interpolymère à base d'éthylène à (C) la cire polymère à base d'éthylène va de 1,5/1,0 à 5,0/1,0.

6. La composition de la revendication 4 ou de la revendication 5, dans laquelle le rapport en poids de (B) l'ester de colophane à (C) la cire polymère à base d'éthylène va de 1,5/1,0 à 5,0/1,0.

7. La composition de l'une quelconque des revendications 1 à 6 comprenant :

   (A) de 20 % en poids à 60 % en poids de l'interpolymère à base d'éthylène, et l'interpolymère ayant une viscosité à l'état fondu, à 177 °C, allant de 500 mPa•s à 20 000 mPa•s ;
   (B) de 20 % en poids à 60 % en poids de l'ester de colophane ; chaque % en poids étant rapporté au poids total de la composition ; et la composition a une viscosité à l'état fondu à 177 °C allant de 500 mPa•s à 3 000 mPa•s ; et la composition ayant une température de rupture d'adhésion au pelage supérieure ou égale à 55 °C.

8. Un article comprenant au moins un constituant formé à partir de la composition de l'une quelconque des revendications précédentes.

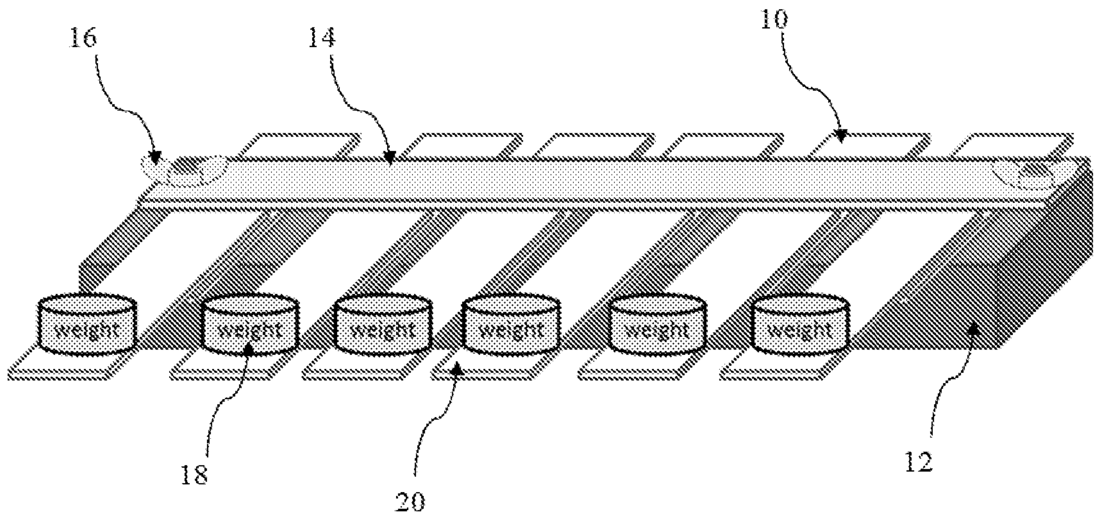


**Figure 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015100349 A
- CN 105585961 A
- CN 102977615 A

### Non-patent literature cited in the description


- Periodic Table of Elements. CRC Press, Inc, 1990
- The Basis of Thermal Analysis. **BERNHARD WUNDERLICH.** Thermal Characterization of Polymeric Materials. 1997, vol. 92, 277-278
- **BERNHARD WUNDERLICH.** The Basis of Thermal Analysis, in Thermal Characterization of Polymeric Materials. 1997, vol. 92, 278-279
- **TH.G. SCHOLTE ; N.L.J. MEIJERINK ; H.M. SCHOFFELEERS ; A.M.G. BRANDS.** *J. Appl. Polym. Sci.,* 1984, vol. 29, 3763-3782
- **E.P. OTOCKA ; R.J. ROE ; N.Y. HELLMAN ; P.M. MUGLIA.** *Macromolecules,* 1971, vol. 4, 507
- **MOUREY ; BALKE.** Chromatography Polym. 1992
- **BALKE ; THITIRATSAKUL ; LEW ; CHEUNG ; MOUREY.** Chromatography Polym. 1992
- *CHEMICAL ABSTRACTS,* 6683-19-8